# EUROPÄISCHE PATENTSCHRIFT

(11) **EP 3 268 818 B1**
(45) Veröffentlichungstag und Bekanntmachung des Hinweises auf die Patenterteilung: **17.04.2019**
(21) Anmeldenummer: 15734340.1
(22) Anmeldetag: 30.06.2015
(51) Int. Cl.: G04B 19/18, G04B 39/00, G04B 45/00

(54) **VERFAHREN ZUM HERSTELLEN EINES UHRGLASES MIT MINDESTENS EINEM SCHMUCKSTEIN**
METHOD FOR PRODUCING A WATCH GLASS HAVING AT LEAST ONE GEMSTONE
PROCEDE POUR PRODUIRE UN VERRE DE MONTRE COMPRENANT AU MOINS UNE PIERRE D'ORNEMENT

(30) Priorität: 13.03.2015 DE 102015204613
(43) Veröffentlichungstag der Anmeldung: 17.01.2018
(73) Patentinhaber: Levitation AG, 6304 Zug (CH)
(72) Erfinder: BONKE, Michael, CH-6317 Oberwil bei Zug (CH)
(74) Vertreter: Hoefer & Partner Patentanwälte mbB
(86) Internationale Anmeldenummer: PCT/EP2015/064839
(87) Internationale Veröffentlichungsnummer: WO 2016/146204

(56) Entgegenhaltungen:
- EP-A1- 0 098 240
- EP-A2- 1 347 349
- AT-A1- 508 838
- CH-A- 670 185
- DE-U1- 9 218 539
- FR-A- 1 277 762
- FR-A1- 2 646 759

## Beschreibung

Die Erfindung betrifft ein Verfahren zum Herstellen eines Uhrglases, in welchem mindestens ein Diamant oder Edelstein oder sonstiger Schmuckstein eingebettet ist. Ferner betrifft die vorliegende Erfindung ein derartiges Uhrglas.

Verfahren zum Herstellen von Uhrgläsern mit in Ausnehmungen eingesetzten Schmuck- bzw. Edelsteinen sind hinlänglich bekannt. So werden z. B. in einem solchen Verfahren aus der EP 1 347 349 A2 zwei Gläser über deren Schmelzpunkt erhitzt und somit zusammenverschmolzen. Dieses Verfahren birgt allerdings den Nachteil, dass sich die Form der Ausnehmungen durch das Erhitzen der Gläser verändern kann. Dadurch neigen oder verschieben sich die Steine in den Ausnehmungen. Dies hat zur Folge, dass die Steine ihre klare und eindeutige Ausrichtung und Position verlieren, was die optische Wirkung des Uhrglases beeinträchtigt. Auch durch nur eine geringe Neigung oder Verschiebung eines oder einiger Steine kann das schöne, schlichte und homogene Bild eines Uhrglases mit mehreren Edelsteinen zerstört werden.

CH 670 185 A zeigt ein Uhrglas aus zwei übereinandergesetzten Gläsern, wobei in entsprechenden Ausnehmungen dekorative Elemente eingesetzt sind. Die Gläser werden dabei kraft- und formschlüssig in ein Gehäuse der Uhr eingepresst.

EP 0098240 A1 zeigt ein Uhrglas mit zwei verklebten Gläsern und einem Schmuckstein, der in einer entsprechenden Ausnehmung in den beiden Gläsern sitzt.

AT 508 838 A zeigt Uhrgläser, in denen Brillanten in Ausnehmungen in einem Trägerglas eingebracht werden. Das Trägerglas und ein Deckglas werden durch eine Klebstoffschicht miteinander verbunden.

Es ist Aufgabe der Erfindung, ein Verfahren zum Herstellen eines Uhrglases, in welchem mindestens ein Diamant oder Edelstein oder sonstiger Schmuckstein eingebettet ist, vorzuschlagen, durch welches eine feste Verbindung zwischen zwei Gläsern ermöglicht wird, ohne die optische Wirkung der Steine und des Uhrglases zu beschädigen.

Die Lösung dieser Aufgabe erfolgt durch ein Verfahren zum Herstellen eines Uhrglases nach Anspruch 1 und einem Uhrglas nach Anspruch 9 und 10.

Das Verfahren umfasst die Schritte des Bereitstellens eines Trägerglases, des Bereitstellen eines Deckglases, des Einbringens von mindestens einer Ausnehmung in das Trägerglas, des Bereitstellens von mindestens einem Diamanten, Edelstein oder sonstigem Schmuckstein,
des Einsetzens des mindestens einen Diamanten, Edelsteins oder Schmucksteins in die mindestens eine Ausnehmung des Trägerglases, des Auflegens des Deckglases auf das Trägerglas, und des Verbindens des Deckglases mit dem Trägerglas derart, dass eine luftdichte Verbindungstelle zwischen dem Deckglas und den Trägerglas entsteht, welche einem Saugnapfeffekt unterliegt. Unter Saugnapfeffekt ist der Effekt zu verstehen, welcher bei zwei Flächen entsteht und einen Unterdruck erzeugen würde, wenn man versuchen würde, die eine Fläche von der anderen Fläche abzutrennen. Durch die luftdichte Verbindungsstelle und den Saugnapfeffekt wird sichergestellt, dass das Deckglas und das Trägerglas stabil und blasenfrei miteinander verbunden bleiben. Somit bleibt die Ausrichtung des Schmucksteins in der Ausnehmung unverändert, was ein hochwertiges ästhetisches Erscheinungsbild, insbesondere ein einheitliches und harmonisches Erscheinungsbild eines Uhrglases mit einer Vielzahl von Schmucksteinen, bewirkt.

Der Begriff des Trägerglases bezeichnet hierbei das Glas, welches die Schmucksteine trägt, unabhängig von der Anordnung des Glases im Uhrglas. So ist z.B. bei einem Uhrglas mit einem oberen und einem unteren Glas, welches Schmucksteine aufweist, die im oberen Glas angeordnet sind, das obere Glas als Trägerglas und das untere Glas als Deckglas zu verstehen.

Vorzugsweise kann das Deckglas erfindungsgemäß mindestens eine Ausnehmung aufweisen.

Im Rahmen der Erfindung kann das Deckglas mindestens eine mit der mindestens einen Ausnehmung des Trägerglases fluchtende Ausnehmung aufweisen. Somit können ein erster Teil des Schmucksteins in der Ausnehmung des Trägerglases und ein zweiter Teil des Schmucksteins in der korrespondierenden Ausnehmung des Deckglases angeordnet sein. Dadurch können jeweils die beiden Gläser dünner ausgebildet werden, was für den optischen Effekt des Uhrglases, besonders wenn ein großer Schmuckstein benutzt wird, vorteilhaft ist. Dabei kann bevorzugt die Summe der Dicke des Trägerglases und der Dicke des Deckglases an der Stelle der Ausnehmung größer als die Höhe des Schmucksteins sein.

Es ist erfindungsgemäß ferner möglich, jeweils mindestens eine Ausnehmung in das Trägerglas und das Deckglas einzubringen, in welche jeweils ein Schmuckstein eingesetzt wird. In diesem Sinne tragen beide Gläser mindestens einen Schmuckstein. Somit ist das Deckglas auch als Trägerglas zu betrachten.

Die luftdichte Verbindungsstelle kann durch das Aufbringen eines Vakuums auf die gesamte Anordnung aus dem Trägerglas und dem Deckglas mittels einer Vakuumkammer oder eines Vakuumofens, und das nachfolgende Entfernen der gesamten Anordnung aus der Vakuumkammer oder dem Vakuumofen erfolgen. Somit wird die Luft, die sich in der Ausnehmung und im Zwischenraum zwischen dem Deckglas und dem Trägerglas befindet, entfernt. Dadurch liegt in der Ausnehmung mit den darin befindlichen Steinen ein Vakuum vor. Durch das Entfernen der gesamten Anordnung aus dem Vakuumofen oder der Vakuumkammer werden das Deckglas und das Trägerglas über den Luftdruck zusammengedrückt, was zu einer Verbindung der zwei Gläser miteinander führt.

Bevorzugt kann die gesamte Anordnung gleichzeitig mit oder nach dem Aufbringen des Vakuums erhitzt werden. Das Erhitzen der gesamten Anordnung erleichtert die Verbindung des Trägerglases mit dem Deckglas. Die Anordnung wird vorzugsweise bis auf eine Temperatur erhitzt, die unterhalb des Schmelzpunktes und oberhalb der Erweichungstemperatur der Gläser liegt, so dass die Gläser an der Oberfläche etwas erweicht werden, ohne dass die Ausnehmung ihre Form verliert. Der Schmuckstein ist somit exakt positioniert.

Besonders bevorzugt ist eine maximale Erhitzungstemperatur kleiner oder gleich 730°C, bevorzugt 700°C und eine maximale Erhitzungsdauer kleiner als 30 min, bevorzugt 20 min. Dadurch wird das Verbinden der Gläser miteinander optimal gefördert. Weiterhin wird eine Beschädigung des Schmucksteins, insbesondere hinsichtlich dessen optischer Wirkung, vermieden.

Es ist ferner von Vorteil, wenn die maximale Erhitzungstemperatur innerhalb von 45 min bis 60 min erreicht wird. Somit werden das Deckglas und das Trägerglas in so kurzer Zeit wie möglich erhitzt. Ein schneller oder langsamer Übergang bis zur maximalen Erhitzungstemperatur kann die gesamte benötigte Zeit zum Ausführen des Verfahrens erhöhen oder die Eigenschaften der Gläser und somit deren Verbindung miteinander negativ beeinflussen.

Die gesamte Anordnung der Gläser kann vorzugsweise mittels eines Kühlofens abgekühlt werden.

Die Abkühlung kann vorzugsweise in drei Schritten erfolgen. Somit wird eine noch stabilere Verbindung der beiden Gläser 2, 3 bereitgestellt. Insbesondere erfolgt eine erste Abkühlung bis auf eine erste Abkühlungstemperatur, bevorzugt von 530°C, in so kurzer Zeit wie möglich. Vorzugsweise findet die Abkühlung von der maximalen Erhitzungstemperatur bis auf die erste Abkühlungstemperatur innerhalb von etwa 40 bis 45 Minuten statt. Die erste Abkühlung kann alternativ auch im Vakuumofen durchgeführt werden, wenn der Vakuumhahn des Vakuumofens geöffnet wird.

Die erste Abkühlungstemperatur wird bevorzugt für eine Zeitdauer von etwa 17 Minuten pro Millimeter Dicke der gesamten Anordnung der Gläser konstant gehalten.

Folglich wird die gesamte Anordnung über einen Zeitraum von etwa 17 Minuten pro Millimeter Dicke der gesamten Anordnung der Gläser auf eine zweite Abkühlungstemperatur, bevorzugt eine zweite Abkühlungstemperatur von 480°C, gleichmäßig abgekühlt.

Anschließend wird die gesamte Anordnung innerhalb eines gleichen Zeitraums wie bei der zweiten Abkühlung auf eine dritte Abkühlungstemperatur, welche bevorzugt einer Raumtemperatur von 20°C entspricht, abgekühlt.

Vorzugsweise ist die Dauer der Schritte der Erhaltung der ersten Abkühlungstemperatur, der zweiten Abkühlung und der dritten Abkühlung dieselbe. Insbesondere finden jeweils diese Schritte innerhalb von etwa 17 Minuten pro Millimeter Dicke der gesamten Anordnung der Gläser statt.

Dabei dürfen der zweite Abkühlungsschritt und der dritte Abkühlungsschritt insgesamt nicht weniger als 45 Minuten dauern.

Dadurch kann während des Abkühlens das Entstehen von Spannungen im Uhrglas vermieden werden, welche anderenfalls zu einem plötzlichen Sprung des Uhrglases führen könnten.

Erfindungsgemäß wird, ggf. zusätzlich zum Aufbringen des Vakuums auf die gesamte Anordnung, die luftdichte Verbindungsstelle zwischen dem Deckglas und dem Trägerglas durch das Einbringen einer Zwischenschicht zwischen das Trägerglas und das Deckglas vor dem Auflegen des Deckglases auf das Trägerglas, und das Zusammendrücken der gesamten Anordnung erfolgen. Das Vorsehen einer Zwischenschicht zwischen dem Deckglas und dem Trägerglas verstärkt den Saugnapfeffekt, so dass die zwei Gläser miteinander stark verbunden werden. Eine Erhitzung ist bei Verwendung der Zwischenschicht somit nicht mehr nötig und das Verfahren kann auch unter Raumtemperatur oder "kalt" verlaufen. Die Verwendung einer Zwischenschicht hat den weiteren Vorteil, dass das erfindungsgemäße Verfahren auch für Gläser wie z. B. Saphirglas, welches sehr kratzfest ist, angewandt werden kann, welche eine sehr hohe Erweichungstemperatur haben. Bei solchen Temperaturen würde der optische Effekt der Schmuckstein beeinträchtigt werden. Ferner kann die Benutzung einer Zwischenschicht das Verbinden von Gläsern ermöglichen oder erleichtern, welche eine unterschiedliche chemische und physikalische Struktur, wie z. B. Mineralglas und Saphirglas, aufweisen. Wenn die gesamte Anordnung doch erhitzt wird, um
das Verbinden der Gläser miteinander zu unterstützen, hat das Vorhandensein der Zwischenschicht zwischen den beiden Gläsern eine deutliche Reduzierung der maximalen notwendigen Erhitzungstemperatur zur Folge.

Die Zwischenschicht kann vorzugsweise eine organische oder anorganische Verbindungs- oder Klebemasse oder Adhäsionsschicht oder eine elastische Folie umfassen. So kann z.B. das Trägerglas mit einer dünnen Silikonschicht besprüht werden. Flächenabweichungen des Trägerglases und des Deckglases können durch die Zwischenschicht ausgeglichen werden, was zu einer sehr stabilen Verbindung der zwei Gläser führt.

Um eine noch stabilere und sicherere Verbindung des Trägerglases mit dem Deckglas zu ermöglichen, wird die Zwischenschicht erfindungsgemäß über eine gesamte gemeinsame Kontaktfläche zwischen das Trägerglas und das Deckglas eingebracht. Die Zwischenschicht erstreckt sich somit bis zu einem Rand der Gläser. Durch die große Kontaktfläche steht eine große Verbindungskraft für das Verbinden der Gläser zur Verfügung. Als Kontaktfläche ist die Fläche zu verstehen, über die das Trägerglas und das Deckglas tatsächlich miteinander kontaktieren. Die Ausnehmung ist somit von der Zwischenschicht nicht abgedeckt.

Bei der Benutzung einer Zwischenschicht zwischen den zwei Gläsern ist eine maximale Erhitzungstemperatur kleiner oder gleich 100°C, bevorzugt 60°C vorteilhaft. Die Erhitzungstemperatur ist deutlich kleiner als der Schmelzpunkt und die Erweichungstemperatur der Gläser, was auch schonend für den Schmuckstein wirkt.

In günstiger Weiterbildung der Erfindung werden eine dem Trägerglas zugewandte Fläche des Deckglases und eine dem Deckglas zugewandte Fläche des Trägerglases gleich und komplementär gewölbt. Somit kann bei der Benutzung von gewölbten Gläsern keine Luft in den Zwischenraum zwischen dem Deckglas und dem Trägerglas eindringen, was ein Abtrennen der Gläser voneinander verursachen könnte. Die Erfindung ist somit nicht auf plane Gläser beschränkt.

In vorteilhafter Weise ist der Schmuckstein in der Ausnehmung exakt positioniert. Der Schmuckstein kann somit in der Ausnehmung nicht wackeln, wodurch ein eleganter optischer Effekt des Uhrglases erreicht wird.

Die vorliegende Erfindung betrifft ferner ein Uhrglas, welches ein Trägerglas, welches mit mindestens einer Ausnehmung versehen ist, ein Deckglas, mit mindestens einem Diamanten, Edelstein oder sonstigen Schmuckstein, welcher in der mindestens einen Ausnehmung eingesetzt ist, umfasst, wobei das Deckglas auf dem Trägerglas aufgelegt und mit dem Trägerglas derart verbunden ist, dass eine luftdichte Verbindungsstelle zwischen dem Deckglas und dem Trägerglas vorhanden ist, welche einem Saugnapfeffekt unterliegt.

Somit betrifft die vorliegende Erfindung ein Uhrglas, welches nach dem erfindungsgemäßen Verfahren hergestellt ist. Damit sind die oben mit Bezug auf das erfindungsgemäße Herstellverfahren genannten Vorteile verbunden.

Des Weiteren betrifft die vorliegende Erfindung eine Uhr, welche ein erfindungsgemäßes Uhrglas aufweist.

Weitere Einzelheiten, Vorteile und Merkmale der vorliegenden Erfindung ergeben sich aus nachfolgender Beschreibung eines Ausführungsbeispiels anhand der Zeichnung, wobei gleiche bzw. funktional gleiche Teile jeweils mit dem gleichen Bezugszeichen bezeichnet sind. Es zeigt:
- Fig. 1: eine Draufsicht einer Uhr, welche ein Uhrglas mit Diamanten umfasst,
- Fig. 2: eine stark vereinfachte, schematische Schnittansicht eines Uhrglases aus einem Deckglas und einem Trägerglas gemäß einem ersten, nichterfindungsgemäßen Ausführungsbeispiel im nicht zusammengebauten Zustand,
- Fig. 3: eine stark vereinfachte, schematische Schnittansicht des Uhrglases von Fig. 2 im zusammengebauten Zustand,
- Fig. 4: eine stark vereinfachte, schematische Schnittansicht eines Uhrglases aus einem Deckglas und einem Trägerglas gemäß einem zweiten Ausführungsbeispiel der vorliegenden Erfindung im nicht zusammengebauten Zustand, und
- Fig. 5: eine stark vereinfachte, schematische Schnittansicht des erfindungsgemäßen Uhrglases von Fig. 4 im zusammengebauten Zustand.

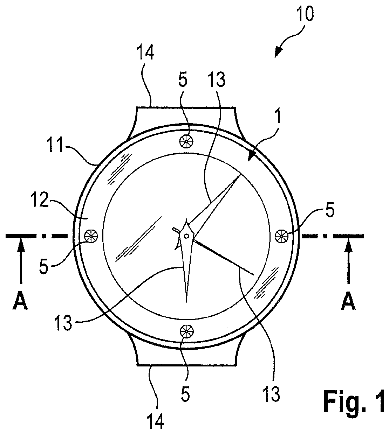

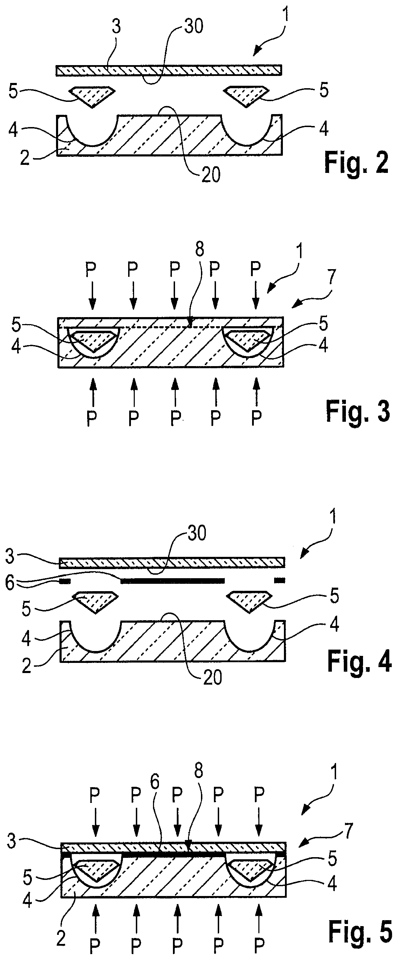

Nachfolgend wird unter Bezugnahme auf die Fig. 1 bis Fig. 3 ein Uhrglas 1 gemäß einem ersten Ausführungsbeispiel im Detail beschrieben. Fig. 1 zeigt die Draufsicht einer Uhr für das nicht-erfindungsgemäße Ausführungsbeispiel und das zweite, erfindungsgemäße Ausführungsbeispiel. Fig. 2 und 3 zeigen ein nicht-erfindungsgemäßes Ausführungsbeispiel. Fig. 4 und 5 zeigen ein Ausführungsbeispiel, das unter den Schutzbereich der Ansprüche fällt. Die Fig. 1 zeigt eine Uhr 10 in der Form einer Armbanduhr mit einem Gehäuse 11 und einem Uhrglas 1, welches im Gehäuse 11 angeordnet und mit Schmucksteinen 5 versehen ist. Das Gehäuse 11 sowie das Uhrglas 1 sind kreisförmig ausgebildet, können allerdings jede andere Form wie z. B. eines Rechtecks, eines Polygons usw. aufweisen.

Insbesondere sind hierbei vier als Diamanten dargestellte Schmucksteine 5 mit einem konstanten Radius in Umfangsrichtung mit gleichem Abstand voneinander im Uhrglas 1 angeordnet. Die Position sowie die Anzahl der Schmucksteinen 5 können aber je nach Uhrdesign beliebig gewählt werden. So ist es zum Beispiel ebenso möglich, einen Schmuckstein, zwei oder zwölf Schmucksteinen in das Uhrglas 1 einzubauen. Die Uhr 10 weist ferner ein Zifferblatt 12, welches beispielsweise als Goldblatt ausgebildet ist, sowie drei Zeiger 13 für die Anzeige der Stunden, Minuten und Sekunden, und zwei Anschlüsse für ein Armband 14 auf.

Die Fig. 2 ist eine stark vereinfachte, schematische Ansicht eines Schnitts A-A des Uhrglases 1 der Fig. 1 im nicht zusammengebauten Zustand. Das Uhrglas 1 weist ein Trägerglas 2 und ein Deckglas 3 auf. Das Trägerglas 2 und das Deckglas 3 sind aus derselben Glasart, insbesondere Mineralglas, ausgebildet. Andere Glasarten können auch benutzt werden. Es ist im Rahmen der Erfindung möglich, unterschiedliche Glasarten zu kombinieren.

Im Trägerglas 2 sind Ausnehmungen 4 angeordnet, welche zur Aufnahme von Schmucksteinen 5 dienen. Das Deckglas 3 und das Trägerglas 2 sind kreisförmig ausgebildet und weisen denselben Durchmesser auf. Die Gläser 2, 3 unterscheiden sich in deren Dicke, wobei das Deckglas 3 dünner geformt ist. Es ist aber auch möglich, dass die zwei Gläser 2, 3 dieselbe Dicke aufweisen. Weiterhin sind eine Innenfläche 20 des Trägerglases 2 und eine Innenfläche 30 des Deckglases 3 an der Kontaktstelle der zwei Gläser 2, 3 eben ausgebildet. Nach einer alternativen Ausgestaltung können aber die Innenflächen 20, 30 auch gleich und komplementär gewölbt sein.

Das endgefertigte Uhrglas 1 ist in Fig. 3 gezeigt. Hierbei sind das Trägerglas 2 und das Deckglas 3 miteinander verbunden und bilden somit im zusammengebauten Zustand eine Glaseinheit 7 . Die zwei Gläser 2, 3 schmiegen sich im zusammengebauten Zustand aneinander, so dass sie optisch durch einen Betrachter nicht mehr zu unterscheiden sind. Somit ergibt sich eine nahtlose, luftdichte Verbindungsstelle 8 um die Ausnehmungen 4.

Nachfolgend wird das Verfahren zum Herstellen des Uhrglases 1 gemäß den Fig. 2 und Fig. 3 beschrieben.

Zuerst werden das Trägerglas 2 und das Deckglas 3 bereitgestellt und Ausnehmungen 4 in das Trägerglas 2 eingebracht, beispielsweise mittels eines Lasers. Die in der erwünschten Form und Größe bereitgestellten Schmucksteine 5 werden dann in die Ausnehmungen 4 eingesetzt. Das Deckglas 3 wird auf das Trägerglas 2 aufgelegt und die gesamte Anordnung aus den zwei Gläsern 2, 3 wird anschließend in einen nicht gezeigten Vakuumofen eingelegt.

Im Vakuumofen wird ein Vakuum auf die gesamte Anordnung aufgebracht. Bevorzugt wird ein Vakuum von kleiner als 0.01 bar benutzt. Anstatt eines Vakuumofens kann auch eine Vakuumkammer benutzt werden. Durch das Aufbringen des Vakuums wird die in den Ausnehmungen 4 und im Zwischenraum zwischen dem Trägerglas 2 und dem Deckglas 3 befindliche Luft entfernt. Dadurch dienen die Ausnehmungen 4 als Vakuumkammern.

Gleichzeitig wird die gesamte Anordnung aus dem Deckglas 3 und dem Trägerglas 2 auf eine Temperatur erhitzt, welche oberhalb der Erweichungstemperatur und unterhalb des Schmelzpunktes der Gläser 2, 3 liegt. Somit kann sichergestellt werden, dass die in das Trägerglas 2 eingebrachte Ausnehmungen 4 nicht verformt werden.

Die maximale Erhitzungstemperatur sollte bevorzugt so schnell wie möglich erreicht werden. Insbesondere wird die gesamte Anordnung bis auf eine maximale Erhitzungstemperatur von etwa 700°C erhitzt. Somit wird eine perfekte Verbindung des Trägerglases 2 mit dem Deckglas 3 ermöglicht.

Vorzugsweise soll die Erhitzungstemperatur von Raumtemperatur auf die maximale Erhitzungstemperatur innerhalb von ungefähr 45 Minuten bis 60 Minuten ansteigen. Bei einem solchen Temperaturverlauf wird bei einem sehr schnellen Ansteigen der Temperatur ein thermischer Schock der Gläser 2,3 vermieden.

Die maximale Erhitzungstemperatur wird dann für etwa 20 Minuten aufrechterhalten. Dadurch werden die Gläser 2, 3 so teigig wie nötig, um deren Verbinden miteinander zu erleichtern, ohne die Schmucksteine 5 zu beschädigen.

Danach wird das Vakuum auf die gesamte Anordnung abgebaut, indem die gesamte Anordnung aus dem Vakuumofen entfernt wird. Dafür wird ein Vakuumhahn des Vakuumofens geöffnet, wobei der Druck im Vakuumofen innerhalb von kurzer Zeit auf Atmosphärendruck ansteigt. Die durch das Erhitzen teigig gewordenen Gläser 2, 3 werden durch den außerhalb des Vakuumofens herrschenden Atmosphärendruck zusammengedrückt, da die Ausnehmungen 4 unter Unterdruck stehen. Dies hat die Verbindung des Deckglases 3 mit dem Trägerglas 2 zur Folge, so dass eine gemeinsame Glaseinheit 7 entsteht.

Ferner wird die gesamte Anordnung bzw. die Glaseinheit 7 abgekühlt. Zum Abkühlen wird die Glaseinheit 7 aus dem Vakuumofen entfernt und in einen Kühlofen gesetzt. Dies hat den Vorteil, dass bei einer Massenproduktion von Uhrgläsern der Vakuumofen für die nächste Ladung zur Verfügung steht. Die Abkühlung wird kontrolliert ausgeführt und kann vorzugsweise in drei Schritten erfolgen. Somit wird eine noch stabilere Verbindung der beiden Gläser 2, 3 bereitgestellt. Insbesondere erfolgt eine erste Abkühlung bis auf eine erste Abkühlungstemperatur, bevorzugt von 530°C, in so kurzer Zeit wie möglich. Vorzugsweise findet die Abkühlung von der maximalen Erhitzungstemperatur bis auf die erste Abkühlungstemperatur innerhalb von etwa 40 bis 45 Minuten statt.

Die Abkühlung der gesamten Anordnung kann alternativ auch im Vakuumofen durchgeführt werden, wenn der Vakuumhahn des Vakuumofens geöffnet wird. Dies kann besonders vorteilhaft bei der Produktion einer relativ kleinen Stückzahl von Uhrgläsern sein. Nachdem der Vakuumhahn geöffnet wird, dient der mit Luft geflutete Vakuumofen nur als Kühlofen. Dabei findet eine natürliche Auskühlung des Ofens statt.

Die erste Abkühlungstemperatur wird bevorzugt bei einer gesamten Dicke der beiden Gläser 2, 3 von 2 mm für eine Zeitdauer von etwa 34 Minuten konstant gehalten. Folglich wird die gesamte Anordnung auf eine zweite Abkühlungstemperatur, bevorzugt eine zweite Abkühlungstemperatur von 480°C, über einen Zeitraum von etwa 34 Minuten gleichmäßig abgekühlt. Anschließend wird die gesamte Anordnung innerhalb eines gleichen Zeitraums auf eine dritte Abkühlungstemperatur, welche bevorzugt einer Raumtemperatur von 20°C entspricht, abgekühlt.

Das Zusammendrücken des Deckglases 3 mit dem Trägerglas 2 aufgrund des Atmosphärendrucks (in Fig. 3 durch Pfeile P dargestellt) in Kombination mit dem Abkühlen der gesamten Anordnung führt zu einem Fusen der beiden Gläser 2,3 miteinander, wodurch ein stabiles Uhrglas mit einem sehr hochwertigen und eleganten optischen Effekt hergestellt wird.

Nachfolgend wird unter Bezugnahme auf die Fig. 4 bis 5 ein Uhrglas 1 gemäß einem Ausführungsbeispiel der vorliegenden Erfindung im Detail beschrieben.

Grundsätzlich unterscheidet sich das Uhrglas 1 des zweiten Ausführungsbeispiels vom ersten Ausführungsbeispiel dadurch, dass vor dem Auflegen des Deckglases 3 auf das Trägerglas 2 eine Zwischenschicht 6 zwischen das Deckglas 3 und das Trägerglas 6 aufgebracht wird. Die Zwischenschicht 6, welche als organische oder anorganische Verbindungs- oder Klebemasse oder Adhäsionsschicht oder als elastische Folie ausgebildet sein kann, wird auf die gesamte Kontaktfläche zwischen den beiden Gläsern 2,3 eingelegt. Durch das Zwischendrücken der Gläser 2,3 durch den Luftdruck wird die Zwischenschicht 6 so stark an die Gläser gepresst, dass ein Einströmen von Luft in die Ausnehmungen 4 verhindert wird. Somit ergibt sich eine luftdichte Verbindungsstelle 8 zwischen dem Trägerglas 2 und dem Deckglas 3. Im Gegensatz zum ersten Ausführungsbeispiel werden das Trägerglas 2 und das Deckglas 3 über die Zwischenschicht 6 und nicht direkt miteinander verbunden. Die Zwischenschicht 6 ist allerdings aufgrund ihrer sehr niedrigen Dicke und ihrer optischen Eigenschaften sowie dem hohen Druck, der die zwei Gläser 2, 3 zusammendrückt, durch einen Betrachter optisch nicht zu erkennen. Zum Zwecke der Veranschaulichung ist die Zwischenschicht 6 in den Figuren 4 und 5 vergrößert dargestellt.

Durch das Vorsehen der Zwischenschicht 6, was den entstehenden Saugnapfeffekt verstärkt, kann das Erhitzen der gesamten Anordnung auf eine maximale Erhitzungstemperatur kleiner als die Erweichungstemperatur der Gläser 2, 3 erfolgen. Bevorzugt werden die Gläser 2, 3 bis auf eine Erhitzungstemperatur von kleiner als 100°C, insbesondere bis auf 60°C aufgeheizt. In vorteilhafter Weise kann das Herstellverfahren auch unter Raumtemperatur durchgeführt werden. Somit kann auf einen Vakuumofen oder zusätzliche zu einer Vakuumkammer Heizmittel verzichtet werden, wodurch eine Kostenersparnis beim Durchführen des Verfahrens möglich ist.

Neben der vorstehenden schriftlichen Beschreibung der Erfindung wird zu deren ergänzender Offenbarung hiermit explizit auf die zeichnerische Darstellung in den Fig. 1 bis 5 Bezug genommen.

### Bezugszeichenliste

- 1: Uhrglas
- 2: Trägerglas
- 3: Deckglas
- 4: Ausnehmung
- 5: Schmuckstein / Diamant / Edelstein
- 6: Zwischenschicht
- 7: Glaseinheit
- 8: luftdichte Verbindungsstelle
- 10: Uhr
- 11: Gehäuse
- 12: Zifferblatt
- 13: Zeiger
- 14: Anschluss für ein Armband
- 20: Innenseite des Trägerglases (dem Deckglas zugewandte Seite des Trägerglases)
- 30: Innenseite des Deckglases (dem Trägerglas zugewandte Seite des Deckglases)
- A-A: Schnitt
- P: Luftdruck bzw. Atmosphärendruck

## Patentansprüche

1. Verfahren zum Herstellen eines Uhrglases, in welchem mindestens ein Diamant oder Edelstein oder sonstiger Schmuckstein (5) eingebettet ist, umfassend die folgenden Schritte:
- Bereitstellen eines Trägerglases (2),
- Bereitstellen eines Deckglases (3),
- Einbringen von mindestens einer Ausnehmung (4) in das Trägerglas (2),
- Bereitstellen von mindestens einem Diamanten, Edelstein oder sonstigen Schmuckstein (5),
- Einsetzen des mindestens einen Diamanten, Edelsteins oder Schmucksteins (5) in die mindestens eine Ausnehmung (4) des Trägerglases (2),
- Auflegen des Deckglases (3) auf das Trägerglas (2), und
- Verbinden des Deckglases (3) mit dem Trägerglas (2) derart, dass eine luftdichte Verbindungstelle zwischen dem Deckglas (3) und dem Trägerglas (2) entsteht, welche einem Saugnapfeffekt unterliegt,
- wobei die luftdichte Verbindungsstelle zwischen dem Deckglas (3) und dem Trägerglas (2) durch das Einbringen einer Zwischenschicht (6) zwischen das Trägerglas (2) und das Deckglas (3) vor dem Auflegen des Deckglases (3) auf das Trägerglas (2) und das Zusammendrücken der gesamten Anordnung aus dem Trägerglas (2) und dem Deckglas (3) erfolgt,
- wobei die Zwischenschicht (6) über eine gesamte gemeinsame Kontaktfläche zwischen das Trägerglas (2) und das Deckglas (3) eingebracht wird,
- und wobei die Ausnehmung (4) von der Zwischenschicht (6) nicht abgedeckt ist.

2. Verfahren nach Anspruch 1, **dadurch gekennzeichnet, dass** die luftdichte Verbindungsstelle durch das Aufbringen eines Vakuums auf die gesamte Anordnung aus dem Trägerglas (2) und dem Deckglas (3) mittels einer Vakuumkammer oder eines Vakuumofens, und das nachfolgende Entfernen der gesamten Anordnung aus der Vakuumkammer oder dem Vakuumofen erfolgt.

3. Verfahren nach Anspruch 2, umfassend ferner den Schritt des Erhitzens der gesamten Anordnung gleichzeitig mit oder nach dem Aufbringen des Vakuums.

4. Verfahren nach Anspruch 3, **dadurch gekennzeichnet, dass** eine maximale Erhitzungstemperatur kleiner oder gleich 730°C, bevorzugt 700°C und eine maximale Erhitzungsdauer kleiner 30 min, bevorzugt 20 min, sind.

5. Verfahren nach Anspruch 4, **dadurch gekennzeichnet, dass** die maximale Erhitzungstemperatur innerhalb von 45 min bis 60 min erreicht wird.

6. Verfahren nach einem der vorhergehenden Ansprüche, **dadurch gekennzeichnet, dass** die Zwischenschicht (6) eine organische oder anorganische Verbindungs- oder Klebemasse oder Adhäsionsschicht oder eine elastische Folie umfasst.

7. Verfahren nach einem der vorhergehenden Ansprüche, **dadurch gekennzeichnet, dass** eine maximale Erhitzungstemperatur kleiner oder gleich 100°C, bevorzugt 60°C ist.

8. Verfahren nach einem der vorherigen Ansprüche, **dadurch gekennzeichnet, dass** eine dem Trägerglas (2) zugewandte Fläche des Deckglases (3) und eine dem Deckglas (3) zugewandte Fläche des Trägerglases (2) gleich und komplementär gewölbt werden.

9. Uhrglas, umfassend:
- ein Trägerglas (2), welches mit mindestens einer Ausnehmung (4) versehen ist,
- ein Deckglas (3),
- und mindestens einen Diamanten, Edelstein oder sonstigen Schmuckstein, welcher in der mindestens einen Ausnehmung (4) eingesetzt ist,
- wobei das Deckglas auf dem Trägerglas (2) aufgelegt und mit dem Trägerglas (2) derart verbunden ist, dass eine luftdichte Verbindungsstelle zwischen dem Deckglas (3) und dem Trägerglas (2) vorhanden ist, welche einem Saugnapfeffekt unterliegt,
- wobei die luftdichte Verbindungsstelle zwischen dem Deckglas (3) und dem Trägerglas (2) durch eine zwischen das Trägerglas (2) und das Deckglas (3) eingebrachte Zwischenschicht (6) und das Zusammendrücken der gesamten Anordnung aus Trägerglas (2) und Deckglas (3) erfolgt ist,
- wobei die Zwischenschicht (6) über eine gesamte gemeinsame Kontaktfläche zwischen Trägerglas (2) und Deckglas (3) eingebracht ist,
- und wobei die Ausnehmung (4) von der Zwischenschicht (6) nicht abgedeckt ist.

10. Uhrglas, **dadurch gekennzeichnet, dass** dieses nach einem Verfahren nach den Ansprüchen 1 bis 8 hergestellt ist.

## Claims

1. Method for manufacturing a watch glass, in which at least one diamond or gemstone or another kind of precious stone (5) is embedded, comprising the following steps:
- providing a carrier glass (2),
- providing a cover glass (3),
- inserting at least one recess (4) into the carrier glass (2),
- providing at least one diamond, gemstone or other kind of precious stone (5),
- inserting the at least one diamond, gemstone or precious stone (5) into the at least one recess (4) of the carrier glass (2),
- placing the cover glass (3) onto the carrier glass (2), and
- connecting the cover glass (3) with the carrier glass (2) in such a manner that an airtight connection joint between the cover glass (3) and the carrier glass (2) is created, which is subject to a suction cup effect,
- wherein the airtight connection joint between the cover glass (3) and the carrier glass (2) is realized by inserting an intermediate layer (6) between the carrier glass (2) and the cover glass (3) before the cover glass (3) is placed on the carrier glass (2) and pressing together the entire arrangement of carrier glass (2) and cover glass (3),
- wherein the intermediate layer (6) is inserted across the entire common contact surface between the carrier glass (2) and cover glass (3),
- and wherein the recess (4) is not covered by the intermediate layer (6).

2. Method according to claim 1, **characterized in that** the airtight connection joint is realized by applying a vacuum onto the entire arrangement of carrier glass (2) and cover glass (3) by means of a vacuum chamber or a vacuum furnace, and the subsequent removal of the entire arrangement from the vacuum chamber or the vacuum furnace.

3. Method according to claim 2, further comprising the step of heating the entire arrangement either concurrently or after applying the vacuum.

4. Method according to claim 3, **characterized in that** a maximum heating temperature is less or equal to 730°C, preferably 700°C and a maximum heating time is less than 30 min, preferably 20 min.

5. Method according to claim 4, **characterized in that** the maximum heating temperature is reached within 45 min to 60 min.

6. Method according to any of the preceding claims, **characterized in that** the intermediate layer (6) comprises an organic or inorganic connecting or adhesive mass or adhesive layer or an elastic foil.

7. Method according to any of the preceding claims, **characterized in that** a maximum heating temperature is less or equal to 100°C, preferably 60°C.

8. Method according to any of the preceding claims, **characterized in that** a surface of the cover glass (3) that is facing the carrier glass (2) and a surface of the carrier glass (2) that is facing towards the cover glass (3) are curved in the same and a complementary manner.

9. Watch glass, comprising:
- a carrier glass (2) that is provided with at least one recess (4),
- a cover glass (3),
- and at least one diamond, gemstone or other kind of precious stone, which is inserted into the at least one recess (4),
- wherein the cover glass is placed onto the carrier glass (2) and is connected to the carrier glass (2) in such a manner that an airtight connection joint between the cover glass (3) and the carrier glass (2) is present, which is subject to a suction cup effect,
- wherein the airtight connection joint between the cover glass (3) and the carrier glass (2) is realized through an intermediate layer (6) that is inserted between the carrier glass (2) and the cover glass (3) and pressing together the entire arrangement of carrier glass (2) and cover glass (3),
- wherein the intermediate layer (6) is inserted across the entire common contact surface between the carrier glass (2) and cover glass (3),
- and wherein the recess (4) is not covered by the intermediate layer (6).

10. Watch glass, **characterized in that** it is made according to the method according to claims 1 to 8.

## Revendications

1. Procédé servant à fabriquer un verre de montre, dans lequel est intégré(e) au moins un diamant ou une pierre précieuse ou toute autre pierre fine (5), comprenant les étapes suivantes:
- de mise à disposition d'un verre de support (2),
- de mise à disposition d'un verre de recouvrement (3),
- d'introduction d'au moins un évidement (4) dans le verre de support (2),
- de mise à disposition d'au moins un diamant, une pierre précieuse ou toute autre pierre fine (5),
- d'insertion de l'au moins un diamant, pierre précieuse ou pierre fine (5) dans l'au moins un évidement (4) du verre du support (2),
- de placement du verre de recouvrement (3) sur le verre de support (2), et
- de liaison du verre de recouvrement (3) au verre de support (2) de telle manière qu'un emplacement de liaison étanche à l'air entre le verre de recouvrement (3) et le verre de support (2) se forme, lequel est soumis à un effet de ventouse,
- dans lequel l'emplacement de liaison étanche à l'air entre le verre de recouvrement (3) et le verre de support (2) est réalisé par l'introduction d'une couche intermédiaire (6) entre le verre de support (2) et le verre de recouvrement (3) avant le placement du verre de recouvrement (3) sur le verre de support (2) et par la compression de la totalité de l'ensemble composé du verre de support (2) et du verre de recouvrement (3),
- dans lequel la couche intermédiaire (6) est introduite par l'intermédiaire d'une totalité d'une face de contact commune entre le verre de support (2) et le verre de recouvrement (3),
- et dans lequel l'évidement (4) n'est pas recouvert par la couche intermédiaire (6).

2. Procédé selon la revendication 1, **caractérisé en ce que** sont réalisés l'emplacement de liaison étanche à l'air par l'application d'un vide sur la totalité de l'ensemble composé du verre de support (2) et du verre de recouvrement (3) au moyen d'une chambre sous vide ou d'un four sous vide, et le retrait qui suit de la totalité de l'ensemble hors de la chambre sous vide ou du four sous vide.

3. Procédé selon la revendication 2, comprenant en outre l'étape du réchauffement de la totalité de l'ensemble simultanément avec ou après l'application du vide.

4. Procédé selon la revendication 3, **caractérisé en ce qu'**une température de chauffage maximale est inférieure ou égale à 730 °C, de manière préférée à 700 °C et une durée de chauffage maximale est inférieure à 30 min, de manière préférée à 20 min.

5. Procédé selon la revendication 4, **caractérisé en ce que** la température de chauffage maximale est atteinte dans un délai de 45 min à 60 min.

6. Procédé selon l'une quelconque des revendications précédentes, **caractérisé en ce que** la couche intermédiaire (6) comprend une matière de liaison ou de collage ou une couche d'adhérence organique ou inorganique ou un film élastique.

7. Procédé selon l'une quelconque des revendications précédentes, **caractérisé en ce qu'**une température de chauffage maximale est inférieure ou égale à 100 °C, de manière préférée à 60 °C.

8. Procédé selon l'une quelconque des revendications précédentes, **caractérisé en ce qu'**une face, tournée vers le verre de support (2), du verre de recouvrement (3) et une face, tournée vers le verre de recouvrement (3), du verre de support (2) sont bombées de manière identique et complémentaire.

9. Verre de montre comprenant:
- un verre de support (2), qui est pourvu d'au moins un évidement (4),
- un verre de recouvrement (3),
- et au moins un diamant, pierre précieuse ou toute autre pierre fine, qui est inséré(e) dans l'au moins un évidement (4),
- dans lequel le verre de recouvrement est placé sur le verre de support (2) et est relié au verre de support (2) de telle manière qu'un emplacement de liaison étanche à l'air est présent entre le verre de recouvrement (3) et le verre de support (2), lequel est soumis à un effet de ventouse,
- dans lequel l'emplacement de liaison étanche à l'air entre le verre de recouvrement (3) et le verre de support (2) est réalisé par une couche intermédiaire (6) introduite entre le verre de support (2) et le verre de recouvrement (3) et la compression de la totalité de l'ensemble composé du verre de support (2) et du verre de recouvrement (3),
- dans lequel la couche intermédiaire (6) est introduite par l'intermédiaire de la totalité d'une face de contact commune entre le verre de support (2) et le verre de recouvrement (3),
- et dans lequel l'évidement (4) n'est pas recouvert par la couche intermédiaire (6).

10. Verre de montre, **caractérisé en ce que** celui-ci est fabriqué selon un procédé selon les revendications 1 à 8.
